(19) Europäisches Patentamt
European Patent Office
Office européen des brevets

(11) **EP 2 308 375 B1**

(12) **EUROPEAN PATENT SPECIFICATION**

(45) Date of publication and mention
of the grant of the patent:
**07.09.2016 Bulletin 2016/36**

(51) Int Cl.:
*A61B 6/00* (2006.01)    *H04N 5/58* (2006.01)
*H04N 5/202* (2006.01)    *G09G 3/34* (2006.01)
*G09G 3/36* (2006.01)

(21) Application number: **08791775.3**

(22) Date of filing: **28.07.2008**

(86) International application number:
**PCT/JP2008/063540**

(87) International publication number:
**WO 2010/013308 (04.02.2010 Gazette 2010/05)**

(54) **GRAY SCALE DISPLAY DEVICE**

GRAUSKALEN-ANZEIGEGERÄT

DISPOSITIF D'AFFICHAGE D'ÉCHELLE DE GRIS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**13.04.2011 Bulletin 2011/15**

(73) Proprietor: **NEC Display Solutions, Ltd.
Minato-ku
Tokyo 108-0023 (JP)**

(72) Inventor: **ABE, Masatoshi
Tokyo 108-0023 (JP)**

(74) Representative: **Betten & Resch
Patent- und Rechtsanwälte PartGmbB
Maximiliansplatz 14
80333 München (DE)**

(56) References cited:
WO-A1-2006/008664    WO-A2-2008/007301
JP-A- 9 018 806    JP-A- 2003 284 693
JP-A- 2004 159 986    JP-A- 2005 295 417
JP-A- 2007 236 810    US-A- 5 554 912
US-A1- 2003 231 161    US-A1- 2006 038 807

• KENNETH A. FETTERLY, HARTWIG R. BLUME,
MICHAEL J. FLYNN AND EHSAN SAMEI:
"Introduction to Grayscale Calibration and
Related Aspects of Medical Imaging Grade Liquid
Crystal Displays", JOURNAL OF DIGITAL
IMAGING, vol. 21, no. 2, 1 March 2007
(2007-03-01), pages 193-207, XP002660576, DOI:
10.1007/s10278-007-9022-y

**Description**

TECHNICAL FIELD

The present invention relates to medical video display devices, in particular to gray scale display devices.

BACKGROUND ART

When medical institutes display X-ray pictures so as to discriminate focuses of patients, they need to display subtle luminance differences so as to detect focuses. For this reason, medical video display devices need to have superior gray scale reproducibility.

Standards such as the DICOM (Digital Imaging and Communication in Medicine) standard have been developed on medical pictures and communications. They aim to interconnect different types of digital video devices, produced by different manufacturers inside and outside of hospitals, via networks and video recording media, thus enabling interchanging of medical video information and data transfers. That is, display devices according to the DICOM standard are able to establish compatibility between medical pictures via any types of devices.

The DICOM standard stipulates the gray scale reproducibility in display devices, thus specifying standard display functions for displaying gray scale pictures. Since human eyes demonstrate a relatively high sensitivity to dark regions rather than bright regions on display, standard display functions should be specified as non-linear functions. For this reason, the DICOM standard measures the relationship between JND (Just Noticeable Difference, called a minimum perceptible threshold) indexes, representing minimum luminance differences which can be discriminated by average observers, and luminance values, thus specifying gray-scale standard display functions.

Medical video display devices specify gray-scale standard display functions based on the luminance value (black luminance) at a black display mode, which is available on display, and the luminance value (white luminance) at a white display mode, thus achieving the gray scale reproducibility adapted to the DICOM standard with reference to the LUT (Look Up Table). Hereinafter, the gamma characteristic, which is rendered as the non-linear characteristic by way of the LUT, will be referred to as the DICOM gamma characteristic. As one display device adapted to the DICOM standard, a technology for determining the LUT based on the JND and the DICOM gamma characteristic has been developed (see Patent Document 1, for example).

Patent Document 1: Japanese Patent Application Publication No. 2007-114427

WO 2008/007301 A2 relates to an ultrasound imaging system including an ultrasound probe receiving echo signals from a subject, and a processor converting echo signals received from the probe to echo data corresponding to an ultrasound image. The system also includes a grayscale mapper transforming the echo data received from the processor to a corresponding value of perception data. The grayscale mapper makes this transformation using a DICOM compliant GSDF calibration curve. The perception data is passed to a transform processor, which also receives an ambient light signal from an ambient light sensor. The transform processor converts the perception values to respective digital driving levels based on the ambient light signal and display characteristics of a display device to which the digital driving levels are applied to maintain optimal image display under varying ambient light conditions.

US 2003/231161 A1 relates to an image display device including a liquid crystal panel which has at least one optical sensor for outputting an electric signal resulting from light irradiation, pixel electrodes for driving a liquid crystal, switching elements for switching the pixel electrodes and a single transparent substrate on which the at least one optical sensor, the pixel electrodes and the switching elements are formed by laminating thin films.

DISCLOSURE OF INVENTION

PROBLEMS TO BE SOLVED BY THE INVENTION

Patent Document 1 discloses gray scale reproducibility in conformity with the DICOM standard. In particular, it discloses the technology for maintaining DICOM gamma characteristics following time-lapse variations of backlights of liquid crystal displays. However, in the situation of using medical video display devices, the actual characteristics may deviate from DICOM gamma characteristics under the influence of the environmental light such as the indoor illumination in all places other than completely dark rooms (i.e. places having no surrounding light). This is because the surrounding light reflected on the screen may increase the screen luminance (both the black luminance and the white luminance).

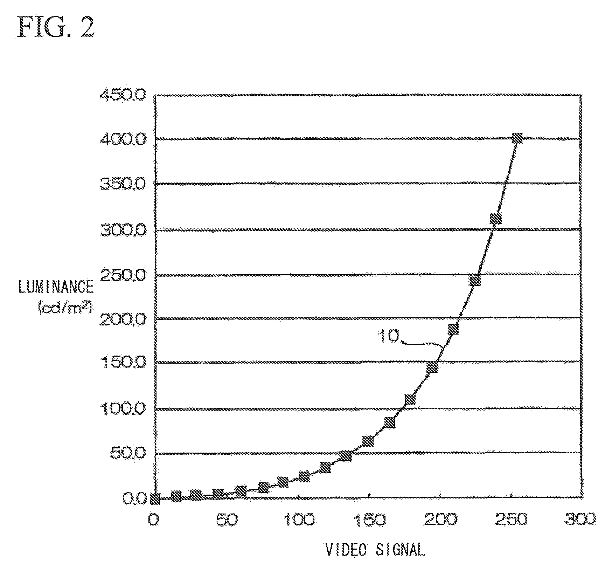

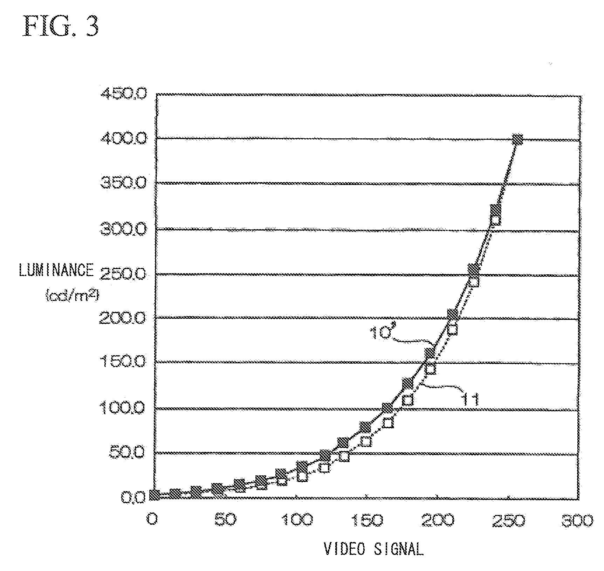

Fig. 2 is an illustration showing the DICOM gamma characteristic with a white luminance of 400 cd/m$^2$ and the black luminance of 0.5 cd/m$^2$ without considering the influence of the surrounding light. Fig. 3 is an illustration showing a state deviated from the DICOM gamma characteristic due to a luminance increase of 2 cd/m$^2$ under the influence of the surrounding light. In Figs. 2 and 3, the vertical axis represents the luminance of a display screen, whilst the horizontal axis represents data of video levels of video signals (gradation values of video signals). In the illustration, 10 denotes an ideal DICOM gamma characteristic without the surrounding light; 10' denotes an ideal DICOM gamma characteristic under the influence of the surrounding light; and 11 denotes a state deviated from the ideal DICOM gamma characteristic due to the influence of the surrounding light, with reference to the same LUT created without considering the influence of the surrounding light.

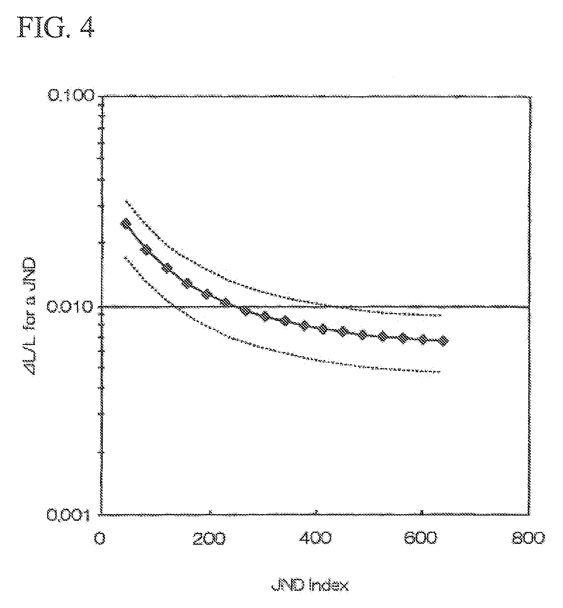

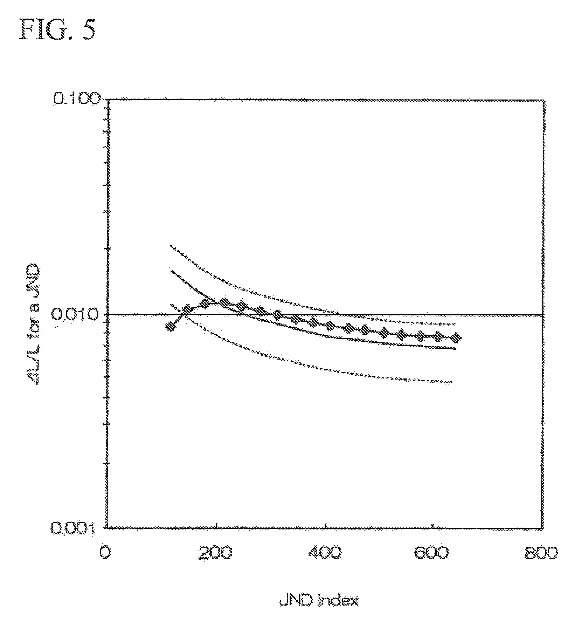

Medical video devices convert luminance values of gray-scale standard display functions into contrast values adapted to JND indexes, thus specifying grades of display devices based on deviations. Figs. 4 and 5 are illustrations in which the vertical axis represents deviations from gray-scale standard display functions whilst the horizontal axis represents JND indexes. Fig. 4 shows deviations without considering the influence of the surrounding light. Fig. 5 shows that deviations from gray-scale standard display functions increase particularly in the low luminance range due to the influence of the surrounding light. In the illustrations, upper/lower curves (dotted lines) define a range of 30% deviations from gray-scale standard display functions. Display devices which fall within this range are referred to as Grade 2.

The gamma characteristic of 2.2 is frequently adopted in display devices normally used, which can be expressed as "Y (output luminance) = X (input gradation)^(2.2)". Actually, it is expressed as "Y=A×X^(2.2)", wherein A denotes a coefficient which is varied according to variations of the brightness of each display device. This is because the input gradation and the output luminance are not univocally determined so that the gamma characteristic (2.2 in the above) may not be varied even when the range of the luminance depicted by each display device is changed. However, the DICOM gamma characteristic is determined based on the JND index representing the minimum luminance difference which can be discriminated by average observers so that the luminance is univocally determined in correspondence with the JND index, whereas it gives rise to a problem in which the good gray scale reproducibility cannot be achieved when the range of the luminance depicted by each display device is varied.

The present invention is made in light of the aforementioned circumstances, wherein the object thereof is to provide a gray scale display device which can achieve the good gray scale reproducibility irrespective of the influence of the surrounding light.

## MEANS FOR SOLVING THE PROBLEM

The present invention is defined in the independent claims. The dependent claims define embodiments of the present invention.

A gray scale display device includes a conversion unit which inputs the video level of a video signal so as to convert and output it based on a table establishing the correlation between an input luminance value and a luminance value according to a DICOM gamma characteristic, a display unit which displays the video signal converted by the conversion unit, an illumination detection unit which detects the brightness of the surrounding light on the front face of the display unit, and an update unit which updates the content of the table in response to the varying brightness of the surrounding light detected by the illumination detection unit, wherein the update unit controls a backlight luminance of the display unit to be decreased in response to increase in the surrounding light so as to maintain a white luminance of the display unit, calculates a black luminance which is varied due to the influence of the surrounding light and due to a decrement of the backlight luminance, and updates the content of the table based on the white luminance and the calculated black luminance, wherein the content of the table is updated only when the surrounding light is varied by a predetermined value or more, or wherein the content of the table is updated after lapse of a predetermined time or more.

It is possible to further include a screen luminance control unit which varies the screen luminance of the display unit in response to the brightness of the surrounding light detected by the illumination detection unit.

A gray scale display method includes the steps of: inputting a luminance of a video signal and converting it based on a table establishing the correlation between an input luminance value and a luminance value according to a DICOM gamma characteristic, displaying the converted video signal on a display unit, detecting the brightness of the surrounding light on the front face of the display unit, controlling a backlight luminance of the display unit to be decreased in response to increase in the surrounding light so as to maintain a white luminance of the display unit, calculating a black luminance which is varied due to the influence of the surrounding light and due to a decrement of the backlight luminance, and updating the content of the table based on the white luminance and the calculated black luminance, wherein the content of the table is updated only when the surrounding light is varied by a predetermined value or more, or wherein the content of the table is updated after lapse of a predetermined time or more.

It is possible to further include the step of varying the screen luminance of the display unit in response to the brightness of the detected surrounding light.

## EFFECT OF THE INVENTION

According to this invention, it is possible to gain effects in which the DICOM gamma characteristic can be normally maintained irrespective of the influence of the surrounding light, and the good gray scale reproducibility can be achieved.

BRIEF DESCRIPTION OF THE DRAWINGS

[Fig. 1] A block diagram showing the constitution of a gray scale display device according to one embodiment of the present invention.
[Fig. 2] An illustration showing the DICOM gamma characteristic without the influence of the surrounding light.
[Fig. 3] An illustration showing the DICOM gamma characteristic under the influence of the surrounding light.
[Fig. 4] An illustration showing a contrast response without the influence of the surrounding light.
[Fig. 5] An illustration showing a contrast response under the influence of the surrounding light.

DESCRIPTION OF THE REFERENCE NUMERALS

1    Video signal processing unit
2    LUT unit (a conversion unit and a table)
3    CPU
4    Memory
5    Illumination sensor
6    Display unit
7    Backlight
8    Backlight drive unit

BEST MODE FOR CARRYING OUT THE INVENTION

Hereinafter, one embodiment of the present invention will be described with reference to the drawings.

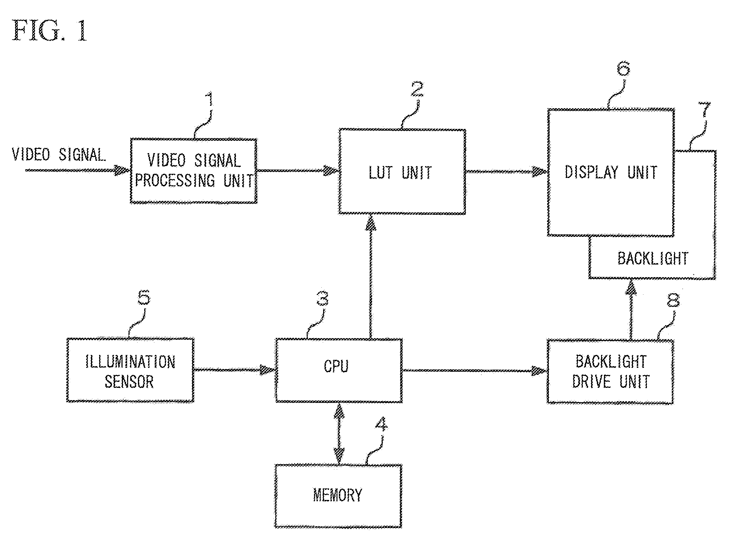

Fig. 1 is a block diagram showing the constitution of a gray scale display device according to one embodiment of the present invention. In this drawing, a video signal processing unit 1 performs signal processing on video signals, thus supplying them to an LUT unit 2. The LUT unit 2 converts the video level of an input video signal according to the DICOM gamma characteristic, supplying it to a display unit 6. In this connection, the LUT unit 2 stores data which need to be modified according to the DICOM gamma characteristic, i.e. a table (a look-up table) establishing the correlation between the input luminance values and the output luminance values according to the DICOM gamma characteristic, in an internal memory area in advance. The CPU 3 rectifies the DICOM gamma characteristic according to the varying brightness of the surrounding light detected by the illumination sensor 5 at any time. Details will be described as follows.
The illumination sensor 5 is arranged on the front face of the display unit 6, for example, so that it detects the brightness of the surrounding light and supplies it to the CPU 3. The correlation between increments of screen luminance, owing to the brightness of the surrounding light detected by the illumination sensor 5, and decrements of luminance of the backlight 7 against increments of screen luminance is established and stored in a memory 4 in advance. It is possible to employ any type of configuration for the illumination sensor 5 as long as they are able to calculate the screen luminance of the display unit 6 which is varied under the influence of the surrounding light; hence, the illumination sensor 5 is not necessarily arranged on the front face of the display unit 6, so that a plurality of sensors can be disposed at different positions, for example, a plurality of illumination units 5 can be disposed at four corners of the screen of the display unit 6. A plurality of sensors makes is possible to calculate screen luminance values in regions splitting the screen and to correct the luminance; this presents an effect in which the correction precision can be improved.
With reference to the correlation between increments of screen luminance owing to the brightness of the surrounding light and decrements of luminance of the backlight 7 against increments of screen luminance, the CPU 3 instructs the backlight drive unit 8 to decrease the luminance of the backlight 7 based on the output of the illumination sensor 5 since it needs to adjust the white luminance in response to an increment of the screen luminance.
Considering a decrement of luminance of the backlight 7 and an increment of screen luminance owing to the surrounding light, the CPU 3 corrects the black luminance and then estimates the correlation of luminance values according to the DICOM gamma characteristic based on the gray-scale standard display function which is produced based on the corrected black luminance and the white luminance (which is retained at the same value before and after the correction), thus updating the content of the table stored in the LUT unit 2 reflecting a subtraction of the increase of screen luminance owing to the surrounding light.
The display unit 6 is configured of a liquid crystal display, for example, and displays a video image according to video signals which have been converted by the LUT unit 2 to achieve the DICOM gamma characteristic. The backlight 7 is driven by the backlight drive unit 8 so as to emit light having the luminance as instructed by the CPU 3.

Next, a detailed description will be given with respect to the CPU 3 handling decrements of luminance of the backlight 7 and correcting the DICOM gamma characteristic of the LUT unit 2.

The CPU 3 adds an increment of luminance detected by the illumination sensor 5 to the screen luminance having no surrounding light, thus temporarily estimating the white luminance. Since the white luminance needs to be maintained at a value designated by an operator, the CPU 3 controls the luminance of the backlight 7 to be decreased by an increment of luminance of the surrounding light. When the operator designates a white luminance Lw whilst the influence of the surrounding light is converted into an increment of luminance $\alpha$, for example, a luminance BL' of the backlight maintaining the white luminance is calculated via Equation (1) using an initial luminance BL.

$$BL' = BL \times Lw/(Lw + \alpha) \quad \dots (1)$$

In the present embodiment, a table establishing the correlation between the increment of luminance $\alpha$ owing to the surrounding light and the decrement of luminance (BL-BL') decreasing the backlight 7 is stored in the memory in advance, wherein the CPU 3 refers to the memory 4 so as to calculate a decrement of luminance of the backlight 7 against the increment of screen luminance owing to the brightness of the surrounding light.

Similarly, considering a decrement of luminance of the backlight 7 and an increment of luminance under the influence of the surrounding light, the CPU 3 calculates a corrected black luminance Lb' via Equation (2).

$$Lb' = (Lb + \alpha) \times BL'/BL = (Lb + \alpha) \times Lw/(Lw + \alpha) \quad \dots (2)$$

The CPU 3 produces the gray-scale standard display function based on the corrected black luminance Lb' and the white luminance (which is retained at the same value before and after the correction) Lw, specifies the content of the table establishing the correlation between the input luminance values and the output luminance values according to the DICOM gamma characteristic, thus updating the content of the table of the LUT unit 2 reflecting the subtraction of an increment of luminance $\alpha$ under the influence of the surrounding light.

According to the aforementioned constitution, video signals are subjected to the necessary signal processing by the video signal processing unit 1, subjected to conversion by the LUT unit 2 achieving the DICOM gamma characteristic, and output to the display unit 6. At this time, the CPU 3 refers to correlation data stored in the memory 4, representing the relationship between the increments of screen luminance owing to the brightness of the surrounding light and the decrements of luminance of the backlight 7 against the increments of screen luminance, so as to read a decrement of luminance of the backlight 7 commensurate with an increment of screen luminance based on the output of the illumination sensor 5, thus instructing the backlight drive unit 8 to decrease the luminance of the backlight 7. This makes it possible to decrease the luminance of the backlight 7 by an increment of screen luminance owing to the brightness of the surrounding light. The CPU 3 corrects the black luminance reflecting a decrement of luminance of the backlight 7, thus updating the content of the LUT unit 2 achieving the DICOM gamma characteristic. Thus, it is possible to achieve good gray scale reproducibility without causing deviations from the gray-scale standard display function.

(Other Embodiments)

Fig. 1 shows the constitution in which the video signal processing unit 1 is followed by the LUT unit 2, whereas the LUT unit 2 can be arranged to precede the video signal processing unit 1, or it can be incorporated into the video signal processing unit 1 or the display unit 6.

The aforementioned embodiment refers to an example of the operation normally following up with the varying surrounding light, whereas it is possible to update the content of the table storing the output luminance values according to the DICOM gamma characteristic of the LUT unit 2 only when the surrounding light is varied by a predetermined value or more, or it is possible to update the content of the table of the LUT unit 2 after a lapse of a predetermined time or more. In addition, it is possible to implement the hysteresis to the varying surrounding light on the table of the LUT unit 2 when updated. Furthermore, it is possible to update the content of the LUT unit 2 not automatically but according to the user's intension via on-screen display commands and via communications of PC applications.

The aforementioned embodiment refers to a liquid crystal display serving as the display unit 6 using the backlight 7, however, which is not necessarily limited to a liquid crystal display; hence, it is possible to employ self-light-emitting display units such as CRT (Cathode Ray Tube), PDP (Plasma Display Panel), and organic EL. In this case, Lb' can be processed in a similar manner to Lw'. Alternatively, it is possible to calculate a control value of the backlight drive unit 8 without reading a decrement of luminance of the backlight 7 but by measuring it using a luminance sensor, which is not illustrated.

Without performing recalculation achieving the DICOM gamma characteristic, it is possible to store JND indexes and luminance characteristic data reflecting monitor characteristics in the memory 4 in advance, so that they are read from the memory without recalculation.

The present embodiment refers to an example of the operation for decreasing the luminance of the backlight 7 while the screen luminance increases owing to the surrounding light. Similarly, it can be applied to another operation for increasing the luminance of the display unit while the screen luminance decreases owing to the surrounding light upon installing a table representing the correlation between the level of the surrounding light and the increment of luminance in the LUT unit 2.

INDUSTRIAL APPLICABILITY

According to the present embodiment, it is possible to achieve good gray scale reproducibility without causing deviations from the gray-scale standard display function irrespective of the influence of the surrounding light.

**Claims**

1. A gray scale display device comprising:

a conversion unit which inputs a video level of a video signal so as to convert and output it based on a table establishing a correlation between an input luminance value and a luminance value according to a DICOM gamma characteristic;
a display unit (6) which displays the video signal converted by the conversion unit;
an illumination detection unit (5) which detects the brightness of the surrounding light on a front face of the display unit (6); and
an update unit which updates the content of the table in response to the varying brightness of the surrounding light detected by the illumination detection unit (6),
wherein the update unit controls a backlight luminance of the display unit (6) to be decreased in response to increase in the surrounding light so as to maintain a white luminance of the display unit (6), calculates a black luminance which is varied due to the influence of the surrounding light and due to a decrement of the backlight luminance, and updates the content of the table based on the white luminance and the calculated black luminance,
wherein the content of the table is updated only when the surrounding light is varied by a predetermined value or more, or wherein the content of the table is updated after lapse of a predetermined time or more.

2. The gray scale display device according to claim 1, the update unit calculates the decrement of the backlight luminance by referring to a relationship between an increment of a screen luminance owing to the surrounding light and the decrement of the backlight luminance, which is stored in advance.

3. A gray scale display method comprising the steps of:

inputting a luminance of a video signal and converting it based on a table establishing a correlation between an input luminance value and a luminance value according to a DICOM gamma characteristic;
displaying the converted video signal on a display unit;
detecting the brightness of the surrounding light on a front face of the display unit; and
controlling a backlight luminance of the display unit to be decreased in response to increase in the surrounding light so as to maintain a white luminance of the display unit,
calculating a black luminance which is varied due to the influence of the surrounding light and due to a decrement of the backlight luminance, and
updating the content of the table based on the white luminance and the calculated black luminance,
wherein the content of the table is updated only when the surrounding light is varied by a predetermined value or more, or wherein the content of the table is updated after lapse of a predetermined time or more.

4. The gray scale display method according to claim 3, further comprising calculating the decrement of the backlight luminance by referring to a relationship between an increment of a screen luminance owing to the surrounding light and the decrement of the backlight luminance, which is stored in advance.

**Patentansprüche**

1. Graustufenanzeigegerät, umfassend:

   eine Umwandlungseinheit, welche einen Videopegel eines Videosignals derart eingibt, dass es basierend auf einer Tabelle, welche eine Korrelation zwischen einem Eingabehelligkeitswert und einem Helligkeitswert gemäß einer DICOM-Gammacharakteristik herstellt, umwandelt und ausgibt;
   eine Anzeigeeinheit (6), welche das durch die Umwandlungseinheit umgewandelte Videosignal anzeigt;
   eine Beleuchtungserfassungseinheit (5), welche die Helligkeit des umgebenden Lichts an einer Frontfläche der Anzeigeeinheit (6) erfasst; und
   eine Aktualisierungseinheit, welche den Inhalt der Tabelle in Antwort auf das Variieren von durch die Beleuchtungserfassungseinheit (6) erfassten Helligkeit des umgebenden Lichts aktualisiert,
   wobei die Aktualisierungseinheit eine Hintergrundbeleuchtung der Anzeigeeinheit (6) derart steuert, dass sie in Antwort auf eine Erhöhung in dem umgebenden Licht derart verringert wird, dass ein Weißhelligkeitswert der Anzeigeeinheit (6) beibehalten wird, ein Schwarzhelligkeitswert, welcher aufgrund des Einflusses des umgebenden Lichts und aufgrund einer Verminderung der Hintergrundhelligkeit variiert, berechnet und den Inhalt der Tabelle basierend auf der Weißhelligkeit und der berechneten Schwarzhelligkeit aktualisiert,
   wobei der Inhalt der Tabelle nur aktualisiert wird, wenn das umgebende Licht um einen vorbestimmten Wert oder mehr variiert, oder wobei der Inhalt der Tabelle nach Ablauf einer vorbestimmten Zeit oder mehr aktualisiert wird.

2. Graustufenanzeigegerät nach Anspruch 1, wobei die Aktualisierungseinheit die Verminderung der Hintergrundhelligkeit durch Bezugnehmen auf eine Beziehung zwischen einer Erhöhung einer Schirmhelligkeit aufgrund des umgebenden Lichts und der Verminderung der Hintergrundhelligkeit, welche im Vorhinein gespeichert wurde, berechnet.

3. Graustufenanzeigeverfahren, umfassend die Schritte zum:

   Eingeben einer Helligkeit eines Videosignals und Umwandeln desselben basierend auf einer Tabelle, welche eine Korrelation zwischen einem Eingabehelligkeitswert und einem Helligkeitswert gemäß einer DICOM-Gammacharakteristik herstellt;
   Anzeigen des umgewandelten Videosignals auf einer Anzeigeeinheit;
   Erfassen der Helligkeit des umgebenden Lichts an einer Frontfläche der Anzeigeeinheit; und
   Steuern einer Hintergrundhelligkeit der Anzeigeeinheit derart, dass sie in Antwort auf Erhöhung bei dem umgebenden Licht so verringert wird, dass eine Weißhelligkeit der Anzeigeeinheit beibehalten wird,
   Berechnen einer Schwarzhelligkeit, welche aufgrund des Einflusses des umgebenden Lichts und aufgrund einer Verminderung der Hintergrundhelligkeit variiert, und
   Aktualisieren des Inhalts der Tabelle basierend auf der Weißhelligkeit und der berechneten Schwarzhelligkeit,
   wobei der Inhalt der Tabelle nur aktualisiert wird, wenn das umgebende Licht um einen vorbestimmten Wert oder mehr variiert, oder wobei der Inhalt der Tabelle nach Ablauf einer vorbestimmten Zeit oder mehr aktualisiert wird.

4. Graustufenanzeigeverfahren nach Anspruch 3, ferner umfassend Berechnen der Verminderung der Hintergrundhelligkeit durch Bezugnehmen auf eine Beziehung zwischen einer Erhöhung einer Schirmhelligkeit aufgrund des umgebenden Lichts und der Verminderung der Hintergrundhelligkeit, welche im Vorhinein gespeichert wurde.

**Revendications**

1. Dispositif d'affichage sur échelle de gris comprenant :

   une unité de conversion qui entre un niveau vidéo d'un signal vidéo de façon à le convertir et à le délivrer sur la base d'une table établissant une corrélation entre une valeur de luminance d'entrée et une valeur de luminance selon une caractéristique gamma DICOM ;
   une unité d'affichage (6) qui affiche le signal vidéo converti par l'unité de conversion ;
   une unité de détection d'éclairage (5) qui détecte la luminosité de la lumière environnante sur une façade avant de l'unité d'affichage (6) ; et
   une unité de mise à jour qui met à jour le contenu de la table, en réponse à la modification de luminosité de la lumière environnante détectée par l'unité de détection d'éclairage (6),

dans lequel l'unité de mise à jour commande une luminance de rétroéclairage de l'unité d'affichage (6), afin qu'elle diminue en réponse à une augmentation de la lumière environnante, de façon à maintenir une luminance blanche de l'unité d'affichage (6), calcule une luminance noire qui est modifiée du fait de l'influence de la lumière environnante et du fait d'une diminution de la luminance de rétroéclairage, et met à jour le contenu de la table sur la base de la luminance blanche et de la luminance noire calculée,

dans lequel le contenu de la table est mis à jour uniquement lorsque la lumière environnante est modifiée d'une valeur prédéterminée ou plus, ou dans lequel le contenu de la table est mis à jour après un laps de temps prédéterminé ou plus.

**2.** Dispositif d'affichage sur échelle de gris selon la revendication 1, l'unité de mise à jour calculant la diminution de la luminance de rétroéclairage, en se référant à une relation entre une augmentation d'une luminance d'écran due à la lumière environnante et la diminution de la luminance de rétroéclairage, qui est stockée par avance.

**3.** Procédé d'affichage sur échelle de gris comprenant les étapes de :

entrer une luminance d'un signal vidéo et la convertir sur la base d'une table établissant une corrélation entre une valeur de luminance d'entrée et une valeur de luminance selon une caractéristique gamma DICOM ;

afficher le signal vidéo converti sur une unité d'affichage ;

détecter la luminosité de la lumière environnante sur une façade avant de l'unité d'affichage ; et

commander la diminution d'une luminance de rétroéclairage de l'unité d'affichage en réponse à une augmentation de la lumière environnante, de façon à maintenir une luminance blanche de l'unité d'affichage,

calculer une luminance noire qui est modifiée du fait de l'influence de la lumière environnante et du fait d'une diminution de la luminance de rétroéclairage, et

mettre à jour le contenu de la table, sur la base de la luminance blanche et de la luminance noire calculée,

dans lequel le contenu de la table est mis à jour uniquement lorsque la lumière environnante est modifiée d'une valeur prédéterminée ou plus, ou dans lequel le contenu de la table est mis à jour après un laps de temps prédéterminé ou plus.

**4.** Procédé d'affichage sur échelle de gris selon la revendication 3, comprenant en outre le calcul de la diminution de la luminance de rétroéclairage, en se référant à une relation entre une augmentation d'une luminance de l'écran due à la lumière environnante et la diminution de la luminance de rétroéclairage, qui est stockée par avance.

FIG. 1

VIDEO SIGNAL → VIDEO SIGNAL PROCESSING UNIT (1) → LUT UNIT (2) → DISPLAY UNIT (6) / BACKLIGHT (7)

ILLUMINATION SENSOR (5) → CPU (3) → BACKLIGHT DRIVE UNIT (8)

MEMORY (4)

EP 2 308 375 B1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007114427 A
- WO 2008007301 A2
- US 2003231161 A1